# NEUE EUROPÄISCHE PATENTSCHRIFT

(11) **EP 1 111 195 B2**
(45) Veröffentlichungstag und Bekanntmachung des Hinweises auf die Entscheidung über den Einspruch: **01.05.2013**
(45) Hinweis auf die Patenterteilung: 07.01.2009
(21) Anmeldenummer: 00811101.5
(22) Anmeldetag: 21.11.2000
(51) Int. Cl.: F01D 11/12

(54) **Profilierte, als Anstreifschicht verwendete Oberfläche in Strömungsmaschinen**
A structured surface used as grazing layer in turbomachines
Surface structurée utilisée comme couche de rasage dans les turbomachines

(30) Priorität: 20.12.1999 EP 99811170
(43) Veröffentlichungstag der Anmeldung: 27.06.2001
(73) Patentinhaber: Sulzer Metco AG, 5610 Wohlen (CH)
(72) Erfinder: Ghasripoor, Farshad, Dr., Scotia, NY 12302 (US); Müller, Eduard, 8405 Winterthur (CH)
(74) Vertreter: Sulzer Management AG

(56) Entgegenhaltungen:
- EP-A- 0 935 009
- EP-A1- 0 661 415
- EP-A1- 0 716 218
- EP-A1- 0 844 369
- US-A- 3 053 694
- US-A- 4 594 053
- US-A- 4 867 639
- US-A- 5 064 727
- US-A- 5 951 892
- US-B1- 5 217 348

## Beschreibung

Die Erfindung betrifft eine profilierte, als Anstreifschicht verwendete Oberfläche in Strömungsmaschinen gemäss Oberbegriff von Anspruch 1 sowie eine Strömungsmaschine mit einer solchen Oberfläche. Die profilierte, als Anstreifschicht verwendete Oberfläche wird nachfolgend kurz Anstreifschicht genannt.

Bei Strömungsmaschinen wie Flugzeugtriebwerken, stationären Gasturbinen, Turbokompressoren und Pumpen ist es für einen hohen Wirkungsgrad erforderlich, dass an der Peripherie eines Laufschaufeln tragenden Rotors ein Dichtspalt zwischen Schaufelspitzen und Gehäuse während des Betriebs sehr eng ist. Unter Verwendung von Anstreifschichten (engl. abradables) auf der inneren Oberfläche des Gehäuses, über die sich die Spitzen der Laufschaufeln bewegen, gelingt es, minimale Dichtspalten herzustellen, ohne dass dabei die Schaufelspitzen beschädigt werden. Für hohe Betriebstemperaturen, die über ca. 800°C liegen, müssen die Anstreifschichten mit keramischem Material hergestellt werden, das mittels thermischen Spritzverfahren, Flammspritzen oder atmosphärischem Plasmaspritzen, aufgebracht wird. Durch Beimischen einer ausbrennbaren Phase (Polymerpulver) zu einem keramischen Spritzpulver lässt sich eine Porosität der Anstreifschicht erzeugen, dank der durch die Schaufelspitzen des drehenden Rotors feine Partikel aus der Oberfläche der Anstreifschicht freigesetzt werden.

Bei keramischen Anstreifschichten mit nichtprofilierter Oberfläche müssen die Schaufelspitzen üblicherweise gepanzert sein, beispielsweise durch LaserUmschmelzen bei gleichzeitiger Zugabe von Hartpartikeln, damit sie beim Anstreifen nicht beschädigt werden. Freigesetzte Abriebpartikel müssen ohne wesentlichen Widerstand aus dem Dichtspalt entweichen können. Aus der EP-A- 0 935 009 ist eine Anstreifschicht mit profilierter Oberfläche bekannt. Für diese wurde erwartet, dass Abriebpartikel ohne Probleme aus dem Dichtspalt entweichen können und dass auch auf eine Panzerung der Schaufelspitzen verzichtet werden kann. Versuche ergaben dann allerdings, dass an den ungepanzerten Schaufelspitzen beim Anstreifen Material in einer Weise abgetragen wurde, die zu einer gewellten Kante der Schaufelspitzen führte. Ein derartiger Materialabtrag an den Schaufelspitzen ist nicht tolerierbar.

Aufgabe der Erfindung ist es, eine Anstreifschicht zu schaffen, die sich für ungepanzerte Schaufelspitzen eignet. Diese Aufgabe wird durch die im Anspruch 1 definierte Anstreifschicht gelöst.

US 4.594.053 beschreibt ein Gehäuse einer Strömungsmaschine enthaltend eine Gehäusewand mit einer wabenformigen Anstreifschicht aus keramischen Material, wobei die Anstreifschicht zuden die Merkmale des Oberbegriffs des Anspruchs 1 aufweist.

Die profilierte Oberfläche wird als Anstreifschicht in Strömungsmaschinen verwendet. In dieser Maschine bewegen sich Schaufelspitzen in einer vorgegebenen Richtung über die profilierte Anstreifschicht. Sie erzeugen dabei eine durch Materialabtrag gebildete Teilfäche, eine Anstreiffläche. Die Profilierung der Oberfläche ist durch Rippen gebildet, die kammerartige Vertiefungen umgeben. Den Rippen ist jeweils eine Rippenrichtung zuordenbar. Die Anstreiffläche bildet ein aus streifenförmigen Elementen aufgebautes Muster, dessen Elemente in den Richtungen der Rippen auf Verbindungslinien zwischen Eckpunkten eines Bezugsgitters liegen. Weitgehend an jeder Stelle der Anstreiffläche - d. h. zu mehr als 80 - 95% der Anstreiffläche - unterscheidet sich die Rippenrichtung von der Bewegungsrichtung der Schaufelspitzen. Für mindestens zwei Drittel der Anstreiffläche weicht die Bewegungsrichtung von der Rippenrichtung um mehr als 30°, vorzugsweise mehr als 45° ab. Die streifenförmigen Elemente der Anstreiffläche können gekrümmte sowie diskrete und/oder teilweise zusammenhängende Streifen sein.

Dank der erfindungsgemässen Ausgestaltung der Profilierung der Anstreifschicht, die unter Berücksichtigung der Bewegungsrichtung der Schaufelspitzen durchgeführt wird, ergibt sich ein geringerer Materialabtrag an den ungepanzerten Schaufelspitzen und ausserdem ein Materialabtrag, der über die ganze Kante einer Spitze gleichmässig verteilt ist. Um den Materialabtrag an den Schaufelspitzen noch weiter zu verkleinern, kann auch vorgesehen werden, die Schaufelspitzen zu panzern.

Die abhängigen Ansprüche 2 bis 7 betreffen vorteilhafte Ausführungsformen der erfindungsgemässen Anstreifschicht. Gegenstand der Ansprüche 8 bis 9 ist eine Strömungsmaschine mit einer solchen Anstreifschicht.

Nachfolgend wird die Erfindung anhand der Zeichnungen erläutert. Es zeigen:
- Fig. 1: einen Querschnitt durch eine Anstreifschicht mit über einer Anstreiffläche laufenden Schaufelspitze,
- Fig. 2: ein Schrägbild der Anstreifschicht,
- Fig. 3: ein erstes Muster der Anstreiffläche einer erfindungsgemässen Anstreifschicht,
- Fig. 4, 5: Abwandlungen des ersten Musters,
- Fig. 6 - 10: Muster weiterer Anstreifflächen gemäss der Erfindung,
- Fig. 11: ein Bezugsgitter mit einer "Penrose"-Struktur, die gleichmässige Fünfecke und Rauten umfasst,
- Fig. 12: ein entsprechendes Muster einer Anstreiffläche und
- Fig. 13: eine Schaufelspitze mit Deckband.

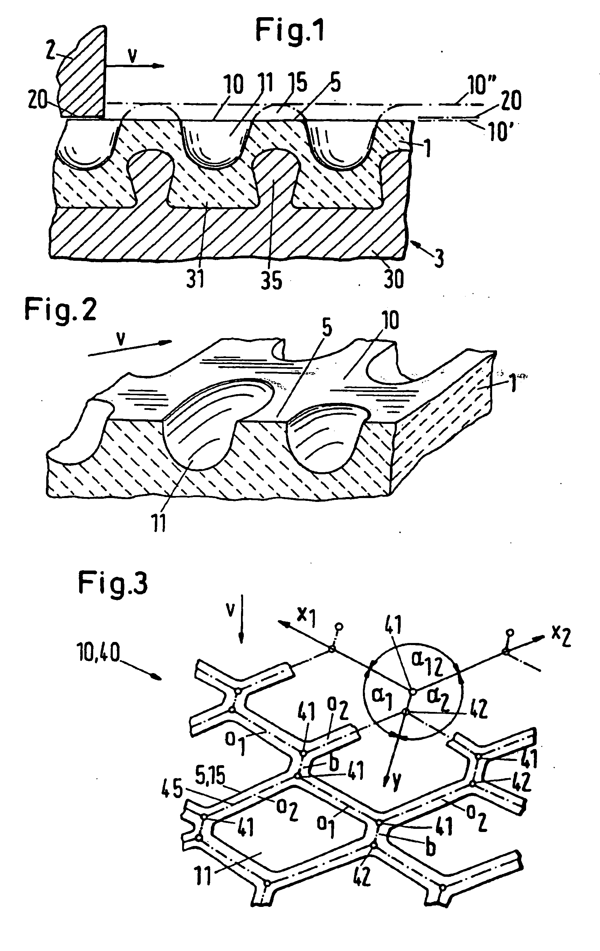

Die in Fig. 1 als Querschnitt dargestellte Anstreifschicht 1 weist eine profilierte Oberfläche auf, über die sich auf einer Ebene 20 eine Schaufelspitze 2 in einer vorgegebenen Richtung v bewegt. Rippen 15 bilden die Profilierung der Oberfläche; sie umgeben kammerartige Vertiefungen 11. Eine ursprüngliche Oberfläche 10" der Anstreifschicht 1 ist strichpunktiert angedeutet. Eine Anstreiffläche 10 in einer Ebene 10' ist von der Schaufelspitze 2 durch Materialabtrag gebildet worden. Eine schmale Lücke zwischen der Ebene 20 und der Anstreiffläche 10 ist ein durch den Materialabtrag erzeugter Dichtspalt. Die Anstreiffläche 10 bildet ein Muster, das man sich aus streifenförmigen Elementen 5 aufgebaut vorstellen kann. Die Anstreifschicht 1 mit der Anstreiffläche 10 und Vertiefungen 11 ist als Schrägbild in Fig. 2 dargestellt. Die folgenden Figuren 3 bis 12 zeigen diverse Muster der Anstreiffläche 10, wie sie sich durch Materialabtrag aus erfindungsgemässen Anstreifschichten 1 ergeben. Die streifenförmigen Elemente 5 der Anstreiffläche 10 können gekrümmt sein; sie können auch als diskrete und/oder teilweise zusammenhängende Streifen vorliegen.

Die Anstreifschicht 1 wird durch thermisches Spritzen auf ein metallisches Substrat 3 aufgebracht, wobei ein Material verwendet wird, das für den Einsatz bei hohen Temperaturen beispielsweise keramisches Material enthält und das bereits für die Verwendung bei nichtprofilierten Anstreifschichten bekannt sein kann (siehe z. B. US-A- 5 434 210). Das Substrat 3 hat eine profilierte, Stege 35 aufweisende Oberfläche. Diee Profilierung kann in verschiedenen Formen vorliegen: als gegossene Profilierung eines Gusskörpers; als mittels Senkerodierens oder mittels eines mechanischen, spanabtragenden Verfahrens hergestellte Profilierung auf einem ursprünglich flachen Metallkörper; als eine Profilierung aus gewobenen oder einzelnen Metalldrähten, die durch Löten oder mittels Laser- oder Diffusionsschweissen auf einen Metallkörper aufgebracht sind; oder als eine Profilierung in Form von Rippen, die durch ein Laserauftragschweissen mikrogussartig aufgetragen sind.

Damit beim thermischen Spritzen auf den Stegen 35 ein Aufbau von Rippen 15 möglich ist, muss vorgesehen werden, dass die Breiten der streifenförmigen Elemente 5 grösser als rund 1 mm sind. Damit beim Materialabtrag von der Anstreifschicht 1 keine Beschädigungen entstehen, müssen diese Breiten von der gleichen Grössenordnung wie die Querschnittsbreite der Schaufelspitze (Breite in der Laufrichtung v) sein: sie sollen das Ein- bis Dreifache dieser Querschnittsbreite nicht überschreiten.

Die Stege 35 weisen Querschnitte auf, die sich gegen einen Rumpf 30 des Substrats 3 hin verengen. Sie können auch Lücken zum Rumpf 30 bilden, wie dies aus der oben genannten EP-A- 0 935 009 bekannt ist. Aufgrund dieser Formgebung ist das die Anstreifschicht 1 bildende Material in Vertiefungen 31 zwischen den Stegen 35 verankert.

Den Rippen 15 ist jeweils eine Rippenrichtung zuordenbar. Erfindungsgemäss muss sich die Rippenrichtung weitgehend an jeder Stelle der Anstreiffläche 10 von der Bewegungsrichtung v der Schaufelspitze 2 unterscheiden. Dabei ist unter "weitgehend" zu verstehen, dass für höchstens 5 - 15% oder 20% der Anstreiffläche 10 eine gleiche Ausrichtung der Schaufelbewegung und der Rippen vorliegt. In welchem Umfang diese Ausrichtungen gleich sein können, muss empirisch ermittelt werden. Für mindestens zwei Drittel der Anstreiffläche 10 muss gemäss der Erfindung die Bewegungsrichtung v von der Rippenrichtung um mehr als 30°, vorzugsweise mehr als 45° abweichen. Werden diese Bedingungen eingehalten, so kann eine ungepanzerte Schaufelspitze 2 verwendet werden.

In Fig. 3 ist ein erstes Muster der Anstreiffläche 10 einer erfindungsgemässen Anstreifschicht 1 gezeigt. Das Muster ist aus den streifenförmigen Elementen 5 aufgebaut. Diese Elemente 5 liegen in den Richtungen der Rippen 15 auf Verbindungslinien 45 zwischen Eckpunkten 41, 42 eines Bezugsgitters 40. Jedem Eckpunkt 41 oder 42 des Bezugsgitters 40 sind drei Achsen x₁, x₂, y zuordenbar. Zwischen diesen Achsen sind Winkel α₁₂, α₂, bzw. α₁ aufgespannt. Rippen 15, die mit a₁, a₂, b bezeichnet werden, liegen auf den Achsen x₁, x₂ bzw. y. Die Rippen a₁ und a₂ sind um einen Faktor, der grösser als 2 ist, länger als die Rippe b. Die Winkel α₁, α₂, α₁₂ sind jeweils grösser als 100° und kleiner als 150° (Gesamtsumme 360°). Das gezeigte Muster hat eine verallgemeinerte Wabenstruktur: den Rippen 15 der kammerartigen Vertiefungen 11 sind Verbindungslinien 45 zwischen jeweils sechs Eckpunkten des Bezugsgitters 40, nämlich drei Eckpunkten 41 und drei Eckpunkten 42, zuordenbar.

Jede Achse y ist zumindest angenähert parallel zu einer einzigen y-Richtung. Die Bewegungsrichtung v der Schaufelspitze 2 weicht von der y-Richtung um einen kleinen Winkel ab, der maximal 30° ist. Vorzugsweise ist die Rippe b verglichen mit den Rippen a₁, a₂ viel kleiner, nämlich um einen Faktor, der grösser als 3 ist. Die der Rippe b zugeordneten Eckpunkte 41 und 42 können so nahe nebeneinander sein, dass die Rippe b praktisch vernachlässigbar ist, d. h. nicht existiert.

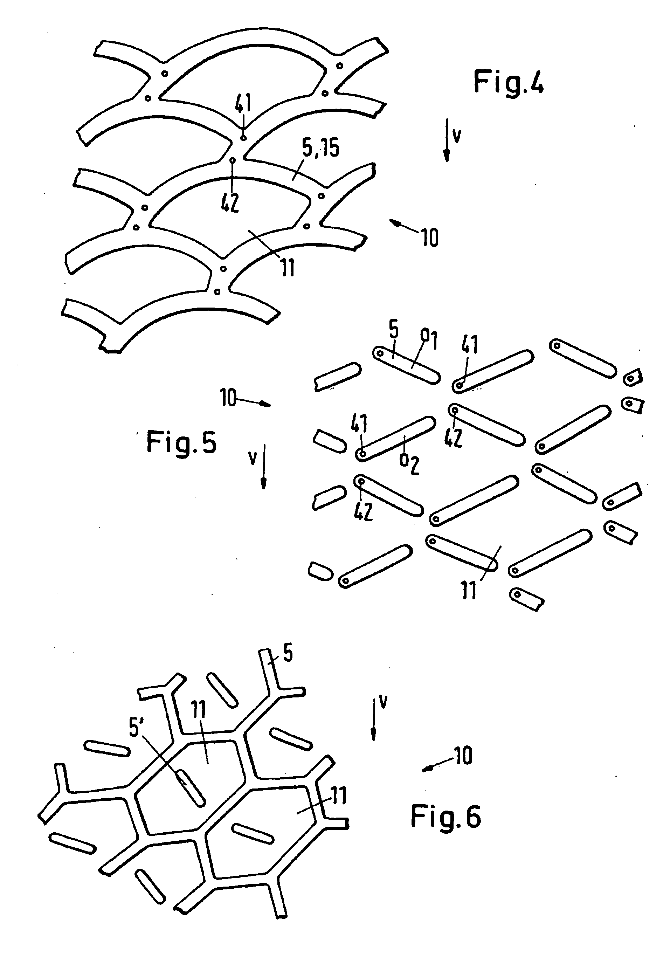

Die Figuren 4 und 5 zeigen Abwandlungen des ersten Musters (Fig. 3). In Fig. 4 hat das Muster eine Struktur, die einer Abdeckung mit Fischschuppen gleicht. Die Rippen 15 sind gekrümmt. In Fig. 5 setzt sich das Muster aus diskreten Elementen 5 zusammen. Es liegen nur Rippen a₁ und a₂ vor; anstelle der Rippen b liegen Lücken vor.

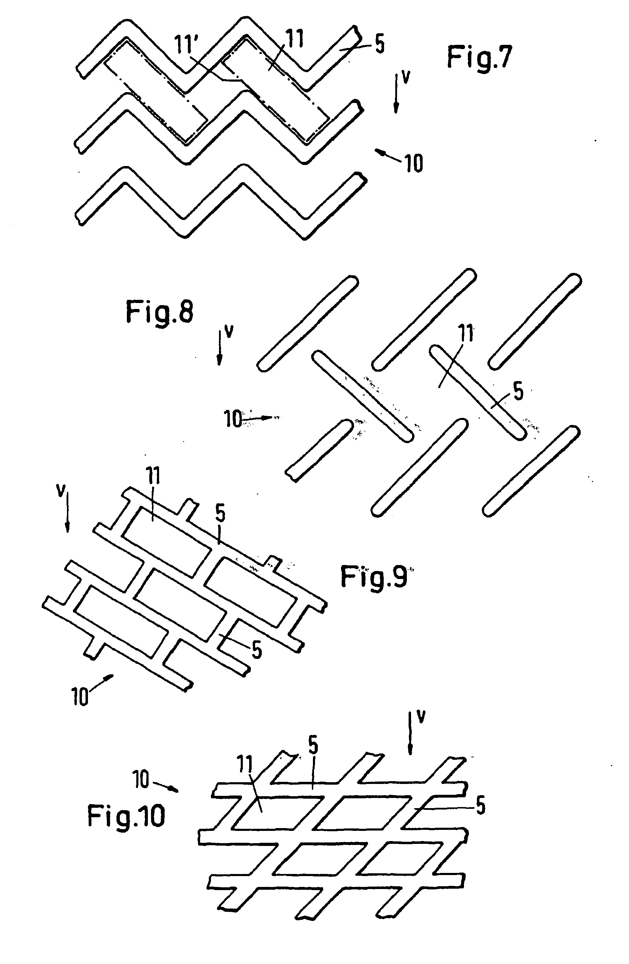

Die Fig. 6 zeigt wieder ein Muster der Anstreiffläche 10, das wabenartig ist. In den einzelnen Vertiefungen 11 sind Elemente 5' als Inseln angeordnet. In Fig. 7 sind die streifenförmigen Elemente 5 auf Zickzacklinien zusammenhängend angeordnet. Die Winkel zwischen den Rippenrichtungen und der Bewegungsrichtung v ist vorzugsweise 45° oder auch etwas grösser. Die Grenzen der kammerartigen Vertiefungen 11 lassen sich hier nicht eindeutig angeben; sie können beispielsweise als die strichpunktiert gezeichneten Rechtecke 11' angesehen werden. Die Fig. 8 zeigt wieder wie die Fig. 5 ein Muster mit diskreten Elementen 5. Dieses Muster hat eine gewisse Verwandtschaft mit dem Zickzackmuster der Fig. 7, indem bei diesem Muster jedes zweite Element 5 des Zickzackstreifens entfernt und die übrig gebliebenen Elemente 5 jeweils an beiden Enden verlängert werden. Die Fig. 9 zeigt ein Muster mit Vertiefungen 11, die rechteckig und zueinander versetzt angeordnet sind. Ein Rautenmuster ist in Fig. 10 abgebildet, bei dem die eine Rippenrichtung senkrecht zur Bewegungsrichtung v steht und die andere Rippenrichtung mit der Bewegungsrichtung v einen Winkel von rund 45° einschliesst.

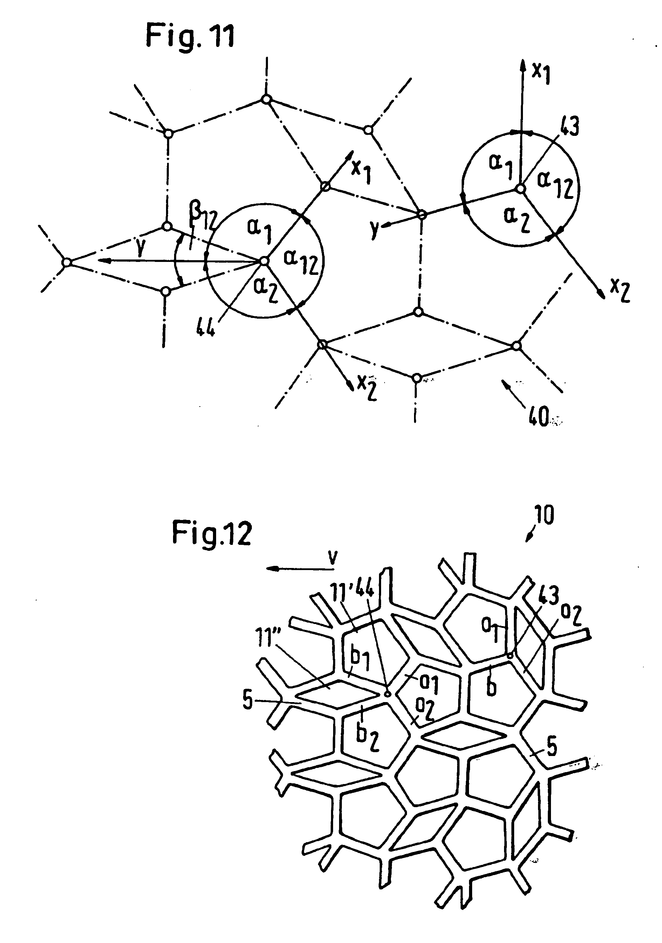

Bei den Ausführungsbeispielen der Figuren 3 bis 10 haben die Anstreifflächen 10 jeweils eine Profilierung, dessen Bezugsgitter 40 aus periodisch angeordneten Elementarzellen (Sechs- oder Vierecke) aufbaubar ist. Es ist auch eine nichtperiodische Profilierung möglich, deren Bezugsgitter 40 beispielsweise eine "Penrose-Struktur" gemäss Fig. 11 aufweist. Die Fig. 12 zeigt ein entsprechendes Muster einer Anstreiffläche 10 mit Vertiefungen 11' und 11", die fünfeckig bzw. rautenförmig sind. Dieses Bezugsgitter 40 umfasst gleichmässige Fünfecke (Winkel zwischen benachbarten Seiten: 108°) und Rauten (Winkel: 36° und 144°). Während bei den periodischen Gitter zwei oder drei Hauptrichtungen vorliegen, sind es bei der "Penrose-Struktur" fünf Hauptrichtungen. Die Bewegungsrichtung v der Schaufelspitzen 2 weicht mit Vorteil um rund 18° von einer dieser Hauptrichtungen ab.

Für ein Bezugsgitter 40, das eine "Penrose-Struktur" zumindest näherungsweise hat, gilt folgendes (vgl. Fig. 11, 12): Jedem Eckpunkt 43 oder 44 des Bezugsgitters 40 sind drei Achsen x₁, x₂, y zuordenbar. Zwischen diesen Achsen sind Winkel α₁₂, α₂, bzw. α₁ aufgespannt. Rippen a₁, a₂ liegen auf den Achsen x₁, x₂. Die Rippen a₁ und a₂ sind weitgehend gleich lang. Die Winkel α₁, α₂, α₁₂ sind jeweils grösser als 100° und kleiner als 150° (Gesamtsumme 360°). Für einen Teil der Eckpunkte, nämlich die Eckpunkte 43, liegt eine Rippe b auf der Achse y. Für die weiteren Eckpunkte 44 ist jeweils eine Gabelung um die Achse y mit zwei Rippen b₁, b₂ gegeben. Die Rippen b bzw. b₁ und b₂ sind weitgehend gleich lang wie a₁ oder a₂. Ein Winkel β₁₂ zwischen b₁ und b₂ ist grösser als 30° und kleiner als 45°. Die Bewegungsrichtung v der Schaufelspitze 2 ist im wesentlichen parallel zu der Achse y einer der Gabelungen.

Die oben beschriebenen Anstreifschichten können statt auf einer Gehäusewand auch auf einem bewegbaren Maschinenteil aufgebracht sein, nämlich wenn die Schaufel stationär angeordnet ist, insbesondere eine Leitschaufel ist, und der Dichtspalt sich zwischen der ruhenden Schaufelspitze und dem bewegten Maschinenteil befindet, wobei das Maschinenteil insbesondere eine Rotorwelle ist. Anstreifschichten können auch auf Deckbändern an den Spitzen stationärer Schaufeln angebracht sein. Die in Anspruch 1 genannte Bewegung der Schaufelspitze ist daher als Relativbewegung zu verstehen.

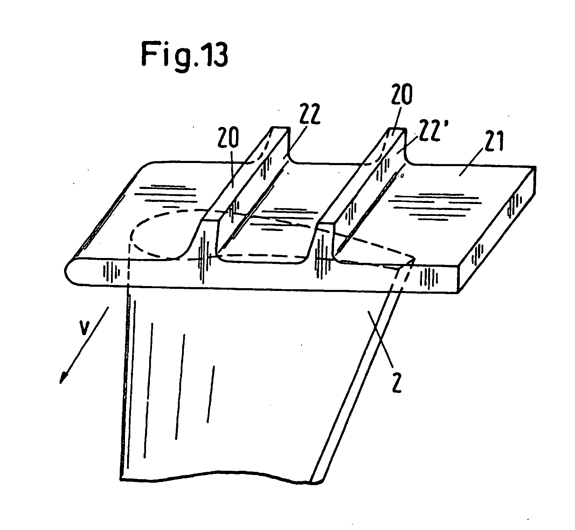

Eine Strömungsmaschine mit einer erfindungsgemässen Anstreifschicht 1 kann auch Schaufeln enthalten, deren Spitzen 2 jeweils als Deckband 21 ausgebildet sind (engl. "shrouded blade"): siehe Fig. 13. Das Deckband 21 weist eine oder mehrere Lamellen 22, 22' auf, die sich in der Bewegungsrichtung v der Schaufelspitze 2 erstrecken. Bei Vorliegen einer Mehrzahl bilden die Lamellen 22, 22' eine Labyrinthdichtung.

## Patentansprüche

1. Anstreifschicht (1) mit profilierter Oberfläche für Strömungsmaschinen, in denen Schaufelspitzen (2) in einer vorgegebenen Richtung (v) über die profilierte Oberfläche der Anstreifschicht (1) bewegbar sind und dabei eine durch Materialabtrag gebildete Teilfläche - eine Anstreiffläche (10) - erzeugbar ist, wobei die Profilierung der Anstreifschicht (1) durch Rippen (15) gebildet ist, den Rippen (15) jeweils eine Rippenrichtung zuordenbar ist und die Anstreiffläche (10) ein aus streifenförmigen Elementen (5) aufgebautes Muster bildet, dessen Elemente (5) in den Richtungen der Rippen auf Verbindungslinien (45) zwischen Eckpunkten (41, 42; 43, 44) eines Bezugsgitters (40) liegen, wobei an mindestens 80% der Anstreiffläche (10) die Rippenrichtung sich von der Bewegungsrichtung (v) der Schaufelspitzen (2) unterscheidet, dass für mindestens zwei Drittel der Anstreiffläche (10) die Bewegungsrichtung (v) von der Rippenrichtung um mehr als 30° abweicht, und jedem Eckpunkt (41, 42, 43, 44) des Bezugsgitters (40) drei Achsen x₁, x₂, y zuordenbar sind und zwischen diesen Achsen Winkel α₁₂, α₂, bzw. α₁ aufgespannt sind, und die Winkel α₁, α₂, α₁₂ jeweils grösser als 100° und kleiner als 150° sind
**dadurch gekennzeichnet, dass**
die streifenförmigen Elemente (5) der Anstreiffläche (10) gekrümmte oder diskrete, und/oder zusammenhängende oder teilweise zusammenhängende Streifen sind, wobei entweder
(i) Rippen a₁, a₂, b auf den Achsen x₁, x₂ bzw. y liegen und a₁ und a₂ verglichen mit b um einen Faktor 2 oder mehr länger sind, und alle Achsen y zumindest angenähert parallel zueinander, d. h. in einer einzigen y-Richtung orientiert sind und dass die Bewegungsrichtung (v) der Schaufelspitze (2) von der y-Richtung um einen kleinen Winkel abweicht, der maximal 30° ist,
oder
(ii) Rippen a₁, a₂ auf den Achsen x₁, x₂ liegen, wobei die Rippen a₁ und a₂ weitgehend gleich lang sind, dass für einen Teil der Eckpunkte (43) eine Rippe b auf der Achse y liegt und für die weiteren Eckpunkte (44) jeweils eine Gabelung um die Achse y mit zwei Rippen b₁, b₂ gegeben ist, wobei b bzw. b₁ und b₂ weitgehend gleich lang wie a₁ oder a₂ sind, ein Winkel β₁₂ zwischen b₁ und b₂ grösser als 30° und kleiner als 45° ist und die Bewegungsrichtung der Schaufelspitze (2) im wesentlichen parallel zu der Achse y einer der Gabelungen ist.

2. Anstreifschicht nach Anspruch 1, **dadurch gekennzeichnet, dass** an mehr als 95% der Anstreiffläche (10) die Rippenrichtung sich von der Bewegungsrichtung (v) der Schaufelspitzen (2) unterscheidet.

3. Anstreifschicht nach Anspruch 1 oder 2, **dadurch gekennzeichnet, dass** für mindestens zwei Drittel der Anstreiffläche (10) die Bewegungsrichtung (v) von der Rippenrichtung um mehr als 45° abweicht.

4. Anstreifschicht nach einem der Ansprüche 1 bis 3, **dadurch gekennzeichnet, dass** die Rippen (15) kammerartige Vertiefungen (11) umgeben, und dass bei der Ausgestaltung gemäss (i) den Rippen (15) einer kammerartigen Vertiefung (11) Verbindungslinien (45) zwischen jeweils sechs Eckpunkten (41, 42) des Bezugsgitters (40) zuordenbar sind.

5. Anstreifschicht nach Anspruch 4, **dadurch gekennzeichnet, dass** anstelle der Rippe b eine Lücke besteht; oder dass die Rippen a₁, a₂ um einen Faktor 3 oder mehr länger als die Rippe b sind; oder dass die Länge der Rippe b praktisch vernachlässigbar ist.

6. Anstreifschicht nach einem der Ansprüche 1 bis 5, **dadurch gekennzeichnet, dass** die Breiten der streifenförmigen Elemente (5) grösser als rund 1 mm sind und in der gleichen Grössenordnung wie die Querschnittsbreite der Schaufelspitze(2), insbesondere kleiner als das Ein- bis Dreifache dieser Breite sind.

7. Anstreifschicht nach einem der Ansprüche 1 bis 6, **dadurch gekennzeichnet, dass** sie durch thermisches Spritzen auf ein metallisches Substrat (3) mit einem Material hergestellt ist, das für bekannte, nichtprofilierte Anstreifschichten geeignet ist und das insbesondere keramisches Material enthält, wobei das Substrat eine profilierte, Stege (35) aufweisende Oberfläche hat und die Profilierung in verschiedenen Formen vorliegen kann: als gegossene Profilierung eines Gusskörpers; als mittels Senkerodierens oder mittels eines mechanischen, spanabtragenden Verfahrens hergestellte Profilierung auf einem ursprünglich flachen Metallkörper; als eine Profilierung aus gewobenen oder einzelnen Metalldrähten, die durch Löten oder mittels einem Laser - oder Diffusionsschweissen auf einen Metallkörper aufgebracht sind; oder als eine Profilierung in Form von Rippen, die durch ein Laserauftragschweissen mikrogussartig aufgetragen sind.

8. Strömungsmaschine, insbesondere Gasturbine, mit einer Anstreifschicht (1) mit profilierter Oberfläche gemäss einem der Ansprüche 1 bis 7, **dadurch gekennzeichnet, dass** die Schaufelspitze (2) Teil einer Laufschaufel ist.

9. Strömungsmaschine nach Anspruch 8, **dadurch gekennzeichnet, dass** ein Deckband die Schaufelspitze (2) bildet, das eine oder mehrere Lamellen aufweist, die sich in der Bewegungsrichtung (v) der Schaufelspitze erstrecken und dabei insbesondere als Dichtlippen einer Labyrinthdichtung ausgebildet sind.

## Claims

1. An abradable (1) having a profiled surface for flow machines, in which blade tips (2) are movable over the profiled surface of the abradable (1) in a predetermined direction (v) and in so doing a partial surface - an abraded surface (10) - which is formed by material ablation can be produced, with the profiling of the abradable (1) being formed by ribs (15), with it being possible in each case to associate a rib direction with the ribs (15) and with the abraded surface (10) forming a pattern which is built up of strip-like elements (5) the elements of which lie in the directions of the ribs on connection lines (45) between corner points (41, 42; 43, 44) of a reference grid (40), wherein, at at least 80% of the abraded surface (10), the rib direction differs from the direction of movement (v) of the blade tips (2); wherein, for at least two thirds of the abraded surface (1), the direction of movement (v) deviates from the rib direction by more than 30°; and wherein three axes x₁, x₂, y can be associated with each corner point (41, 42, 43, 44) of the reference grid (40) and angles α₁₂, α₂, and α₁ respectively are subtended between these axes, and the angles α₁, α₂, α₁₂ are in each case greater than 100° and less than 150°,
**characterized in that**
the strip-like elements (5) of the abraded surface (10) are curved or discrete and/or connected or partly connected strips, with either
(i) ribs a₁, a₂, b lying on the axes x₁, x₂ and y respectively, with a₁ and a₂ being longer by a factor of 2 or more in comparison with b and with all the axes y being at least approximately parallel to one another, i.e. being oriented in a single γ-direction; and **in that** the direction of movement (v) of the blade tip (2) deviates from the y-direction by a small angle, which is 30° at the most;
or
(ii) ribs a₁, a₂ lying on the axes x₁, x₂, with the ribs a₁ and a₂ being largely equally long; **in that** for some of the corner points (43) one rib b lies on the axis y and for the further corner points (44) in each case a branching about the axis y with two ribs b₁, b₂ is given, with b and, respectively, b₁ and b₂ being largely of length equal to that of a₁ or a₂, with an angle β₁₂ between b₁ and b₂ being greater than 30° and less than 45° and with the direction of movement of the blade tip (2) being substantially parallel to the axis y of one of the branchings.

2. An abradable in accordance with claim 1, **characterized in that** the rib direction differs from the direction of movement (v) of the blade tips (2) at more than 95% of the abraded surface (10).

3. An abradable in accordance with claim 1 or claim 2, **characterized in that** the direction of movement (v) deviates from the rib direction by more than 45° for at least two thirds of the abraded surface (10).

4. An abradable in accordance with any one of the claims 1 to 3, **characterized in that** the ribs (15) surround chamber-like depressions (11); and **in that** connection lines (45) between in each case six corner points (41, 42) of the reference grid (40) can be associated with the ribs (15) of a chamber-like depression (11) in the embodiment in accordance with (i).

5. An abradable in accordance with claim 4, **characterized in that** a gap is present instead of the rib b; or **in that** the ribs a₁, a₂ are longer than the rib b by a factor of 3 or more; or **in that** the length of the rib b is practically negligible.

6. An abradable in accordance with any one of the claims 1 to 5, **characterized in that** the widths of the strip-like elements (5) are greater than about 1 mm and are in the same order of magnitude as the cross-sectional width of the blade tip (2), in particular less than one to three times this width.

7. An abradable in accordance with any one of the claims 1 to 6, **characterized in that** it is manufactured by thermal spraying onto a metallic substrate (3) with a material which is suitable for known, non profiled abradables and which in particular contains ceramic material, with the substrate having a profiled surface having webs (35) and with it being possible for the profiling to be present in different forms: as a cast profiling of a cast body; as a profiling which is produced on an originally flat metallic body by means of countersink erosion or by means of a mechanical cutting process; as a profiling of woven or individual metallic wires which are applied to a metallic body through soldering or by means of a laser welding or diffusion welding; or as a profiling in the form of ribs which are applied in a micro-casting manner through a laser application welding.

8. A flow machine, in particular a gas turbine, having an abradable (1) with a profiled surface in accordance with any one of the claims 1 to 7, **characterized in that** the blade tip (2) is part of a rotor blade.

9. A flow machine in accordance with claim 8, **characterized in that** the blade tip (2) is formed by a shrouded blade which has one or more lamellae which extend in the direction of movement (v) of the blade tip and are in particular formed as sealing lips of a labyrinth seal.

## Revendications

1. Couche d'abrasion (1) avec surface profilée pour des turbomachines, dans lesquelles des pointes d'aube (2) sont déplaçables dans une direction prédéfinie (v) sur la surface profilée de la couche d'abrasion (1) et, ce faisant, une face partielle - une face d'abrasion (10) - formée par enlèvement de matériau peut être produite, où le profilage de la couche d'abrasion (1) est formé par des nervures (15), aux nervures (15) peut être associée, respectivement, une direction de nervure, et la face d'abrasion (10) forme un motif constitué d'éléments en forme de bande (5), dont les éléments (5) se situent dans les directions des nervures sur des lignes de liaison (45) entre des points d'angle (41,42;43,44) d'une grille de référence (40), où à au moins 80% de la face d'abrasion (10), la direction des nervures se distingue de la direction de déplacement (v) des pointes d'aube (2), en ce que pour au moins deux tiers de la face d'abrasion (10), la direction de déplacement (v) s'écarte de la direction des nervures selon plus de 30°, et à chaque point d'angle (41,42,43,44) de la grille de référence (40), trois axes x₁, x₂, y peuvent être associés, et entre ces axes des angles α₁₂, α₂, respectivement α₁ sont formés, et les angles α₁, α₂, α₁₂ sont respectivement plus grands que 100° et plus petits que 150°,
**caractérisée en ce que**
les éléments en forme de bande (5) de la face d'abrasion (10) sont des bandes courbées ou discrètes et/ou continues ou partiellement continues, où soit
(i) les nervures a₁, a₂, b se situent sur les axes x₁, x₂ respectivement y, et a₁ et a₂, en comparaison avec b, sont plus longues d'un facteur 2 ou plus, et tous les axes y sont au moins approximativement parallèles les uns aux autres, c'est-à-dire sont orientés dans une seule direction y, et **en ce que** la direction de mouvement (v) de la pointe d'aube (2) s'écarte de la direction y selon un petit angle, qui est au maximum de 30°,
ou
(ii) les nervures a₁, a₂ se situent sur les axes x₁, x₂, où les nervures a₁ et a₂ sont sensiblement de même longueur, **en ce que** pour une partie des points d'angle (43) une nervure b se situe sur l'axe y et qu'il y a pour les autres points d'angle (44) respectivement une bifurcation autour de l'axe y avec deux nervures b₁, b₂, où b respectivement b₁ et b₂ sont sensiblement de même longueur que a₁ ou a₂, un angle β₁₂ entre b₁ et b₂ est plus grand que 30° et plus petit que 45°, et la direction de mouvement de la pointe d'aube (2) est sensiblement parallèle à l'axe y d'une des bifurcations.

2. Couche d'abrasion selon la revendication 1, **caractérisée en ce que** sur plus de 95% de la face d'abrasion (10), la direction des nervures se différencie de la direction de déplacement (v) des pointes d'aube (2).

3. Couche d'abrasion selon la revendication 1 ou 2, **caractérisée en ce que** pour au moins deux tiers de la face d'abrasion (10), la direction de déplacement (v) s'écarte de la direction des nervures selon plus de 45°.

4. Couche d'abrasion selon l'une des revendications 1 à 3, **caractérisée en ce que** les nervures (15) entourent des creux en forme de chambre (11), et **en ce que** lors de la réalisation selon (i), des lignes de liaison (45) entre respectivement six points d'angle (41,42) de la grille de référence (40) peuvent être associées aux nervures (15) d'un creux en forme de chambre (11).

5. Couche d'abrasion selon la revendication 4, **caractérisée en ce qu'**à la place de la nervure b il y a un espace; ou **en ce que** les nervures a₁, a₂ sont plus longues selon un facteur 3 ou plus que la nervure b; ou **en ce que** la longueur de la nervure b est pratiquement négligeable.

6. Couche d'abrasion selon l'une des revendications 1 à 5, **caractérisée en ce que** les largeurs des éléments en forme de bande (5) sont plus grandes qu'environ 1 mm et sont du même ordre de grandeur que la largeur en section transversale de la pointe d'aube (2), en particulier plus petit qu'une à trois fois cette largeur.

7. Couche d'abrasion selon l'une des revendications 1 à 6, **caractérisée en ce qu'**elle est réalisée par une projection thermique sur un substrat métallique (3) avec un matériau qui convient pour des couches d'abrasion connues, non-profilées, et qui contient en particulier du matériau céramique, où le substrat présente une surface profilée, présentant des barrettes (35), et **en ce que** le profilage peut se présenter sous diverses formes: comme profilage coulé d'un corps de coulée; comme profilage réalisé par érosion de descente ou par un procédé mécanique à enlèvement de copeaux, sur un corps métallique initialement plat, comme un profilage en fils métalliques tissés ou individuels qui sont appliqués par brasage ou par un soudage laser ou à diffusion sur un corps métallique; ou comme un profilage sous la forme de nervures qui sont appliquées à la manière d'une microcoulée par un soudage d'application au laser.

8. Turbomachine, en particulier turbine à gaz, avec une couche d'abrasion (1) avec surface profilée selon l'une des revendications 1 à 7, **caractérisée en ce que** la pointe d'aube (2) fait partie d'une aube directrice.

9. Turbomachine selon la revendication 8, **caractérisée en ce qu'**une bande de recouvrement forme la pointe d'aube (2), qui présente une ou plusieurs lamelles, qui s'étendent dans la direction de déplacement (v) de la pointe d'aube et sont réalisées dans ce cas en particulier comme lèvres d'étanchéité d'une garniture de labyrinthe.
